(19) 

**Europäisches Patentamt**
**European Patent Office**
**Office européen des brevets**

(11) **EP 4 718 858 A1**

(12) **EUROPEAN PATENT APPLICATION**

(43) Date of publication:
01.04.2026 Bulletin 2026/14

(21) Application number: 25201725.6

(22) Date of filing: 11.09.2025

(51) International Patent Classification (IPC):
H04N 23/60 (2023.01)        H04N 23/67 (2023.01)

(52) Cooperative Patent Classification (CPC):
H04N 23/675; H04N 23/64

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 27.09.2024 JP 2024168723

(71) Applicant: **Canon Kabushiki Kaisha**
**Tokyo, 146-8501 (JP)**

(72) Inventors:
• **SUGIYAMA, Kenji**
**Tokyo, 146-8501 (JP)**
• **NOGAMI, Atsushi**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **IMAGING ASSISTANCE DEVICE, IMAGING ASSISTANCE METHOD, AND STORAGE MEDIUM**

(57) An imaging assistance device detects a plurality of subjects from a captured image obtained by image capturing in accordance with an input of an imaging setting related at least to focusing, and estimates a defocus range indicating a region of a defocus amount of each subject. The imaging assistance device selects at least one subject from among the plurality of detected subjects based on a detection result of each subject and an estimation result of the defocus range of each subject, and outputs information regarding the focusing on the selected subject or subjects.

## FIG. 1

EP 4 718 858 A1

## Description

BACKGROUND

Technical Field

The present disclosure relates to a technique of imaging assistance.

Description of the Related Art

Many image capturing apparatuses have a function of focusing by a manual operation. Nevertheless, photographers need some experience and training to focus on a subject as intended in a manual operation. Japanese Patent Application Laid-Open No. 2007-279334 discloses a technique for reducing the difficulty of such manual focusing by superimposing the degree of focus deviation, or the degree of focus accuracy, on the display screen.

Nevertheless, the prior art described in Japanese Patent Laid-Open No. 2007-279334 displays a focus degree of a determined region within a screen, and has an issue that it may be difficult to identify which subject is in-focus information in the screen.

SUMMARY

In view of the foregoing, the present disclosure is directed to presenting which subject is in focus to a photographer in an easily understandable manner.

The present disclosure in its first aspect provides an imaging assistance device as specified in claim 1. Optional features are specified in claims 2 to 13. The present disclosure in its second aspect provides an imaging assistance method as specified in claim 14. The present disclosure in its third aspect provides a storage medium as specified in claim 15.

Features of the present disclosure will become apparent from the following description of embodiments with reference to the attached drawings. The following description of embodiments is described by way of example.

BRIEF DESCRIPTION OF THE DRAWINGS

Fig. 1 is a diagram illustrating a functional configuration example of an imaging assistance device according to a first embodiment.
Fig. 2 is a diagram illustrating a hardware configuration example of an image capturing apparatus including an imaging support device.
Fig. 3 is a flowchart illustrating an overview of imaging support processing according to the first embodiment.
Fig. 4 is an explanatory diagram of a defocus amount.
Figs. 5A and 5B are explanatory diagrams of defocus ranges.
Fig. 6 is a detailed flowchart of imaging assisting processing according to the first embodiment.
Figs. 7A and 7B are explanatory diagrams of a subject detection example.
Figs. 8A and 8B are explanatory diagrams of defocus range estimation.
Fig. 9 is an explanatory diagram of a highlighted subject candidate selection example according to the first embodiment.
Figs. 10A and 10B are explanatory diagrams of a subject selection example from a plurality of subjects.
Figs. 11A and 11B are explanatory diagrams of a highlighted display example according to the first embodiment.
Fig. 12 is a detailed flowchart of imaging assisting processing according to a modified example.
Figs. 13A and 13B are explanatory diagrams of a highlighted display example according to a modified example.
Figs. 14A to 14E are diagrams illustrating a focus guide example according to a modified example.
Fig. 15 is a diagram illustrating a focus guide example of a plurality of parts according to a modified example.
Fig. 16 is a diagram illustrating a functional configuration example of an imaging assistance device according to a second embodiment.
Fig. 17 is a detailed flowchart of imaging assisting processing according to the second embodiment.

DESCRIPTION OF THE EMBODIMENTS

Hereinafter, embodiments will be described with reference to the drawings. Each embodiment and modified examples to be described below are not intended to limit the present disclosure, and not all the combinations of features described in each embodiment are always essential to the solution of the present disclosure. The configuration of each embodiment can be appropriately modified or changed depending on the specification of a device to which the present disclosure is applied, and various conditions (e.g., use condition, use environment). Embodiments and modified examples to be described below can also be partially combined as appropriate. In the following embodiments, the same or similar configurations and processing steps are assigned the same reference numerals, and redundant description will be omitted.

<First Embodiment>

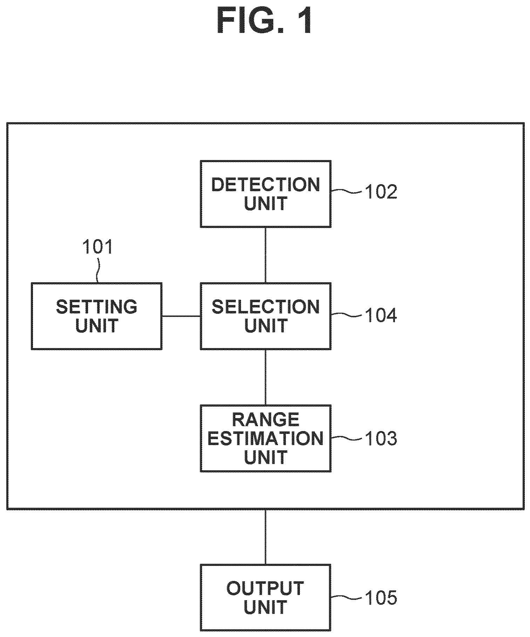

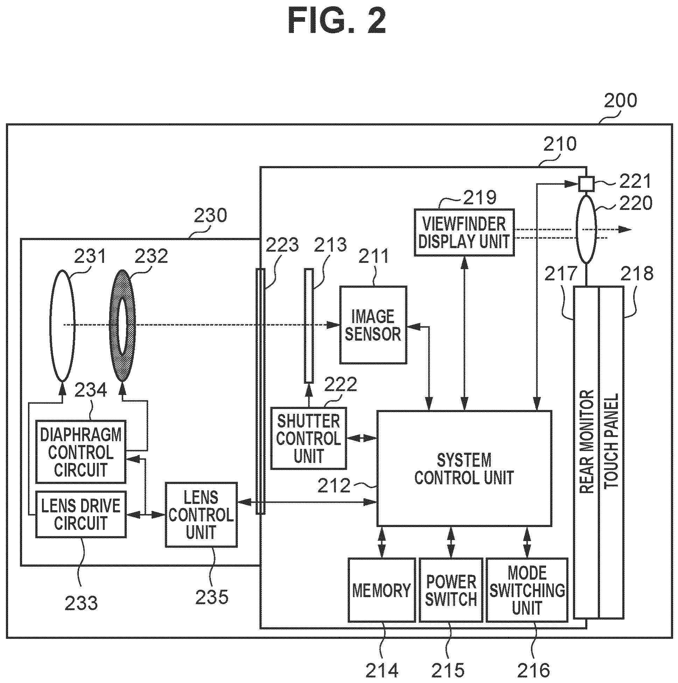

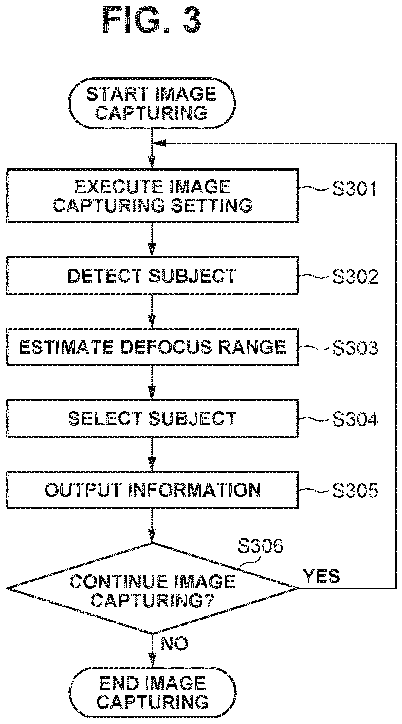

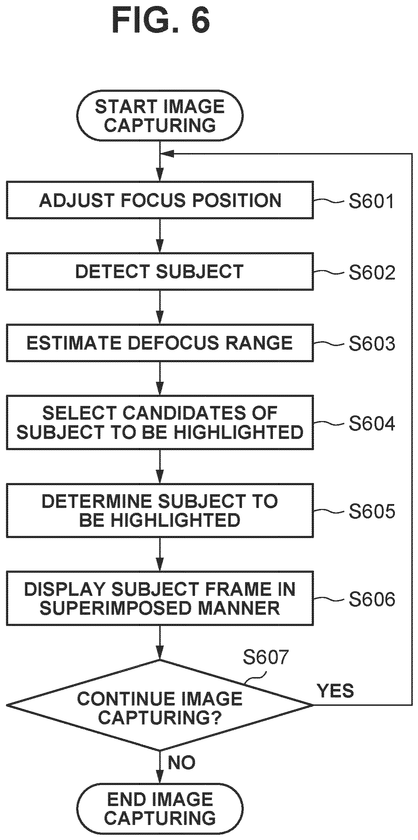

Fig. 1 is a functional block diagram illustrating a functional configuration example of an imaging assistance device according to the first embodiment. Each functional unit of the imaging assistance device illustrated in Fig. 1 is implemented by a system control unit 212 of an image capturing apparatus having a hardware configuration in Fig. 2 to be described below, executing processing in accordance with flowcharts in Figs. 3 and 6 to be described below. Hereinafter, the overview of each functional unit of an imaging assistance device according to an embodiment of the present embodiment will be described with reference to Fig. 1.

A setting unit 101 changes an imaging setting of the image capturing apparatus based on an imaging setting input by a user (hereinafter, referred to as a photographer). Here, the imaging setting of the image capturing apparatus includes, for example, the setting of an in-focus position, and settings of a diaphragm, a shutter speed, ISO sensitivity, and the like. In the present embodiment, the description will be given of an example case where setting input of an in-focus position (focus position) is performed by a manual operation as an input of an imaging setting by a photographer, which will be described in detail below.

A detection unit 102 detects one or more subjects from an image (hereinafter, referred to as a live view image) displayed based on a captured image captured by the image capturing apparatus. In the present embodiment, a "subject" is assumed to be a word including meanings of the entirety (e.g., person) or a part (e.g., body, head, eye, etc., in the case of person) of the subject. Hereinafter, in the present embodiment, the entirety or a part of the subject will collectively be described as "subject", but in a case where a specific distinction is required to be made, these will be clearly described as "the entirety of the subject" or "a part of the subject". The details of subject detection processing will be described below.

A range estimation unit 103 estimates a defocus range of a subject detected by the detection unit 102 from a live view image of the image capturing apparatus. The details of the defocus range and estimation processing of the defocus range will be described below.

A selection unit 104 selects a subject for which information regarding an imaging setting is to be output based on a defocus range estimated by the range estimation unit 103, from among subjects detected by the detection unit 102.

In the present embodiment, an example of selecting an in-focus subject (or focused subject) and a subject with a high focus degree during focusing by a manual operation, which will be described in detail below, will be given as subject selection.

An output unit 105 outputs information regarding an imaging setting, for a subject selected by the selection unit 104. In the present embodiment, an example will be given of displaying a frame indicating a subject selected by the selection unit 104 in a highlighted manner and superimposing the frame on a live view image, as an output of information regarding an imaging setting. A detail of the example will be described below.

Fig. 2 is a block diagram illustrating an example configuration of major hardware of an image capturing apparatus 200 according to the present embodiment. The image capturing apparatus 200 exemplified in Fig. 2 is, for example, an interchangeable-lens digital camera including a camera main body 210, and a lens unit 230 of an image capturing optical system for guiding incident light to an image sensor 211. Fig. 2 illustrates a configuration in a case where the image capturing apparatus 200 is an interchangeable-lens digital camera, but the image capturing apparatus is not limited to a digital camera, and can also be an onboard camera of a smartphone, for example.

The camera main body 210 will now be described.

The image sensor 211 is, for example, a complementary metal-oxide semiconductor (CMOS) image sensor, and converts an optical image formed by the lens unit 230 into an electric signal. The optical image is formed by an image formed on the image sensor 211 via a diaphragm 232 and a shutter 213 from a light beam incident on an imaging lens 231.

The system control unit 212 incorporates a known central processing unit (CPU) or the like, and controls each component in the camera main body 210. The system control unit 212 also includes an image processing unit that performs various types of image processing on an image capture signal obtained by the image sensor 211. The system control unit 212 also includes a phase difference autofocus (AF) unit that performs focus detection processing using a phase error detection method based on focus detection image data (signal for phase difference AF) acquired by the image sensor 211 and processed by the image processing unit. More specifically, the image processing unit generates a pair of image data pieces formed by light beams passing through a pair of pupil regions of the imaging optical system in the lens unit 230, as focus detection image data. The phase difference AF unit detects an out-of-focus amount based on a deviation amount of the pair of image data pieces. In this manner, the phase difference AF unit performs phase difference AF (imaging plane phase difference AF) that is based on output information of the image sensor 211, without using a dedicated AF sensor. Especially in the case of the present embodiment, the system control unit 212 implements each functional unit of the imaging assistance device according to the present embodiment that is illustrated in Fig. 1, by executing processing in accordance with the flowcharts in Figs. 3 and 6 to be described below.

A memory 214 stores programs, variable numbers, constant number, and the like for operating the system control unit 212. The programs include a program for a CPU or the like of the system control unit 212 implementing processing of each flowchart according to the present embodiment, which will be described below. The memory 214 also includes an electrically erasable/storable nonvolatile memory, and stores various parameters and setting values such as ISO sensitivity, an image capturing mode, various types of correction data, and the like.

A power switch 215 switches power on/off of the camera main body 210.

A mode switching unit 216 is a switch for switching the setting of various image capturing modes such as live view image capturing and moving image capturing.

A rear monitor 217 includes a liquid crystal device and a light-emitting diode (LED) that display image capturing information, such as operating states and messages, including characters, images, voice, and the like, in accordance with the execution of programs in the system control unit 212.

A touch panel 218 is arranged in a region nearly-equal to a monitor surface of the rear monitor 217, detects touch of a finger or a pen, and notifies the system control unit 212 of a touch position on the rear monitor 217. The system control unit 212 executes processing of operations or functions associated with such touch positions.

Similarly to the rear monitor 217, a viewfinder display unit 219 displays image capturing information and the like in accordance with the execution of programs in the system control unit 212, and forms an electronic viewfinder (EVF) viewable through an eyepiece lens 220.

An eye approaching state detection unit 221 detects whether a photographer is looking through the EVF. The system control unit 212 selectively displays the above-described image capturing information and the like on the rear monitor 217 or the viewfinder display unit 219 based on a detection result of a photographer's eye approaching state that is obtained by the eye approaching state detection unit 221.

Next, a configuration of the lens unit 230 will be described.

The camera main body 210 and the lens unit 230 are mechanically and electrically bonded via a lens mount mechanism 223. The lens mount mechanism 223 has a configuration that enables the lens unit 230 to be attached to and detached from the camera main body 210.

The lens unit 230 includes the imaging lens 231, the diaphragm 232, a focus ring (not illustrated), a lens drive circuit 233, a diaphragm control circuit 234, and a lens control unit 235. For the sake of simplification, Fig. 2 illustrates only one lens included in the imaging lens 231, but the imaging lens 231 may include a plurality of imaging lens units.

The lens control unit 235 controls the entire lens unit 230. The lens control unit 235 includes a memory (not illustrated) storing various constant numbers, variable numbers, programs, and the like for operating lenses. The lens control unit 235 also includes a nonvolatile memory (not illustrated) holding the largest/smallest aperture value, focal length, and the like, which are information unique to the lens unit.

The lens drive circuit 233 drives a focus lens or the like that is included in the imaging lens 231 of the lens unit 230, under the control of the lens control unit 235.

The diaphragm control circuit 234 drives the diaphragm 232 under the control of the lens control unit 235.

In addition, the lens control unit 235 communicates with the system control unit 212 of the camera main body 210 via the lens mount mechanism 223. For example, in a case where the image capturing apparatus 200 is in an autofocus mode, the system control unit 212 performs an autofocus operation by controlling the lens drive circuit 233 via the lens control unit 235, and driving a focus lens included in the imaging lens 231. In the case of the autofocus mode, the system control unit 212 performs an autofocus operation by driving a focus lens by controlling the lens drive circuit 233 based on a defocus amount calculated with output information of the image sensor 211.

A manual focus mode is also prepared for the image capturing apparatus 200. The manual focus mode is an image capturing mode in which an autofocus function is disabled. In the case of the manual focus mode, a photographer can perform focus position adjustment of putting a focus on a desired subject, by performing an operation of manually turning the focus ring (not illustrated).

For example, in a case where the photographer rotates the focus ring clockwise, the focus lens is moved in accordance with the clockwise rotation of the focus ring, and a focus position is adjusted in a direction in which a farther subject is brought into focus. In contrast, in a case where the photographer rotates the focus ring counterclockwise, the focus lens is moved in accordance with the counterclockwise rotation of the focus ring, and a focus position is adjusted in a direction in which a closer subject is brought into focus. In the image capturing apparatus 200 according to the present embodiment, when the focus ring is operated by the photographer, position information on the focus lens moved in accordance with the operation of the focus ring is transmitted to the system control unit 212 via the lens control unit 235. The system control unit 212 can thereby recognize how the focus position has been adjusted, based on the position information on the focus lens.

Fig. 3 is a flowchart illustrating a simple flow of imaging assisting processing to be performed by the system control unit 212 of the image capturing apparatus 200 according to the present embodiment in a case where the image capturing apparatus 200 according to the present embodiment is in the manual focus mode. Each processing step illustrated in the flowchart in Fig. 3 is performed by each functional unit in Fig. 1 that is formed by the system control unit 212 in Fig. 2 executing a program according to the present embodiment. Hereinafter, the overview of imaging assisting processing to be performed by each functional unit of the imaging assistance device according to the present embodiment will be described with reference to the flowchart in Fig. 3. In the following flowcharts, letter "S" indicates each processing step.

In accordance with an image capturing start instruction from the photographer, the system control unit 212 of the image capturing apparatus 200 according to the present embodiment starts processing in step S301 and subsequent steps in the flowchart in Fig. 3. Here, an image capturing start refers to, for example, bringing the image capturing apparatus 200 into an image capturing mode by turning on the power of the image capturing apparatus 200, and bringing the image capturing apparatus 200 in a sleep state into an image capturing-executable state with half-press of a shutter button or the like. In a case where the image capturing apparatus 200 is an onboard camera of a smartphone, an image capturing start can be activation of a camera application of the smartphone, or the like. In step S301, when the setting unit 101 receives input of an imaging setting from the photographer, the setting unit 101 changes an imaging setting of the image capturing apparatus 200 in accordance with the received imaging setting input. In the case of the present embodiment, the imaging setting of the image capturing apparatus 200 is assumed to be in-focus position adjustment (focus position adjustment) of focusing on a subject with a manual operation, as described above.

As processing in step S302, the detection unit 102 detects one or more subjects from a live view image as described below.

In step S303, the range estimation unit 103 estimates a defocus range from a live view image as described below.

As processing in step S304, the selection unit 104 selects a subject for which information regarding an imaging setting is to be output, from among one or more subjects detected by the detection unit 102, based on the defocus range estimated by the range estimation unit 103. In the present embodiment, because an example of setting an in-focus position with a manual operation serving as an imaging setting is given, the selection unit 104 performs selection of a subject, which is serving as a subject for which information regarding an imaging setting is to be output, based on the in-focus position set with the manual operation. The selection unit 104 selects an in-focus subject and a subject with a high focus degree, which will be described in detail below.

Next, as processing in step S305, the output unit 105 outputs information regarding an imaging setting, for the subject selected by the selection unit 104. As an output of information regarding an imaging setting, the output unit 105 displays a frame indicating the subject selected by the selection unit 104 in a highlighted manner and superimposes the frame on the live view image, which will be described in detail below.

Thereafter, as processing in step S306, the system control unit 212 determines whether to continue image capturing. Unless an image capturing end instruction is issued by the photographer, the system control unit 212 determines to continue image capturing (YES in step S306), and repeatedly executes the processing in steps S301 to S305. When an image capturing end instruction is input from the photographer (NO in step S306), the system control unit 212 ends the processing in the flowchart in Fig. 3. Here, examples of an image capturing end instruction include, for example, turning off the power of the image capturing apparatus 200, switching the mode of the image capturing apparatus 200 from an image capturing mode to a photo view mode, a case where the image capturing apparatus 200 enters the sleep state after the lapse of a preset time or more from a non-operation state in which an operation is not input from the photographer, and the like. In a case where the image capturing apparatus 200 is an onboard camera of a smartphone, an image capturing end can be the end of a camera application of the smartphone, or the like.

Next, a defocus amount to be calculated by the system control unit 212 using output information of the image sensor 211, and a defocus range to be estimated based on the defocus amount will be described.

First of all, a defocus amount will be described.

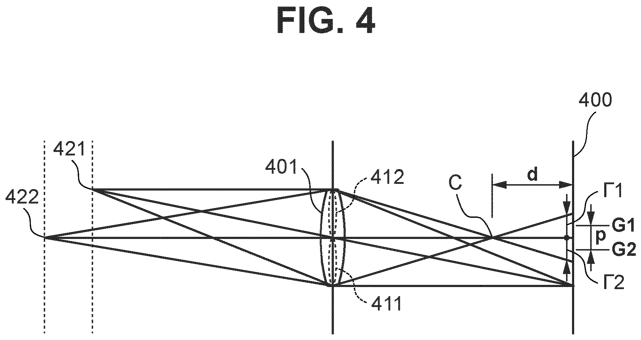

Fig. 4 is a diagram illustrating a relationship between a defocus amount d of the imaging optical system of the lens unit 230, and a phase difference (image shift amount) between a first focus detection signal and a second focus detection signal obtained from output information of the image sensor 211.

In Fig. 4, a lens 401 indicates the imaging lens 231 of the above-described lens unit 230. An imaging plane 400 of the image sensor 211 is arranged to be orthogonal to an optical axis of the lens 401. An exit pupil of the imaging optical system by the lens 401 is divided into two regions corresponding to a first pupil region 411 and a second pupil region 412. The defocus amount d becomes $d = 0$ in an in-focus state in which a distance (magnitude) from an image formation position C of light beams from subjects 421 and 422, to the imaging plane 400 becomes $|d|$, and the image formation position C exists on the imaging plane 400. The defocus amount d is defined such that a front focus state in which the image formation position C exists at a position closer to the subjects than the imaging plane 400 is represented by a negative sign ($d < 0$), and a state in which the image formation position C exists on an opposite side of the subjects across the imaging plane 400 is represented by a positive sign ($d > 0$). In the imaging optical system illustrated in Fig. 4, the subject 421 is in the in-focus state ($d = 0$), and the subject 422 is in the front focus state ($d < 0$). In the present embodiment, the front focus state ($d < 0$) and a back focus state ($d > 0$) will be collectively referred to as a defocus state ($|d| > 0$).

In the case of the front focus state ($d < 0$), light beams having passed through the first pupil region 411 among light beams from the subject 422, are once condensed, and then spread to a width $\Gamma1$ with being centered on a centroid position G1 of the light beams, whereby a defocused image is formed on the imaging plane 400. The defocused image is received by each first focus detection pixel on the image sensor 211, and a first focus detection signal is generated. That is, the first focus detection signal becomes a signal indicating a subject image in which a subject 322 is defocused by a defocus width Γ1 at the centroid position G1 of light beams on the imaging plane 400. The defocus width Γ1 of the subject image increases approximately in proportion to an increase in the magnitude |d| of the defocus amount d.

Similarly, in the case of the front focus state (d < 0), light beams having passed through the second pupil region 412, among light beams from the subject 422, are once condensed, and then spread to a width Γ2 with being centered on a centroid position G2 of the light beams, whereby a defocused image is formed on the imaging plane 400. The defocused image is received by each second focus detection pixel on the image sensor 211, and a second focus detection signal is generated. That is, the second focus detection signal becomes a signal indicating a subject image in which the subject 322 is defocused by a defocus width Γ2 at the centroid position G2 of light beams on the imaging plane 400. The defocus width Γ2 of the subject image increases approximately in proportion to an increase in the magnitude |d| of the defocus amount d.

Similarly, in the case of the front focus state (d < 0), a magnitude |p| of an image shift amount p (= difference G1-G2 between centroid positions of light beams) between the first focus detection signal and the second focus detection signal also increases approximately in proportion to an increase in the magnitude |d| of the defocus amount d.

In contrast, in the case of the back focus state (d > 0), an image shift direction between the first focus detection signal and the second focus detection signal becomes opposite to that in the case of the above-described front focus state.

In this manner, the magnitude of an image shift amount between the first focus detection signal and the second focus detection signal increases in accordance with an increase in the magnitude of a defocus amount. The system control unit 212 according to the present embodiment performs focus detection of an imaging plane phase error detection method of calculating a defocus amount from an image shift amount between the first focus detection signal and the second focus detection signal obtained from output information of the image sensor 211. In other words, the phase difference AF unit converts an image shift amount into a defocus amount using a conversion coefficient calculated based on a baseline length, from a relationship that the magnitude of an image shift amount between the first focus detection signal and the second focus detection signal increases in accordance with an increase in the magnitude of a defocus amount of an image capture signal. In the present embodiment, a product [Fδ] of an F-value of the diaphragm in an imaging optical system during image capturing and a permissible circle of confusion δ is used as a unit of a defocus amount.

Next, a defocus range will be described.

In the present embodiment, a defocus range refers to a value region of a defocus amount of a subject.

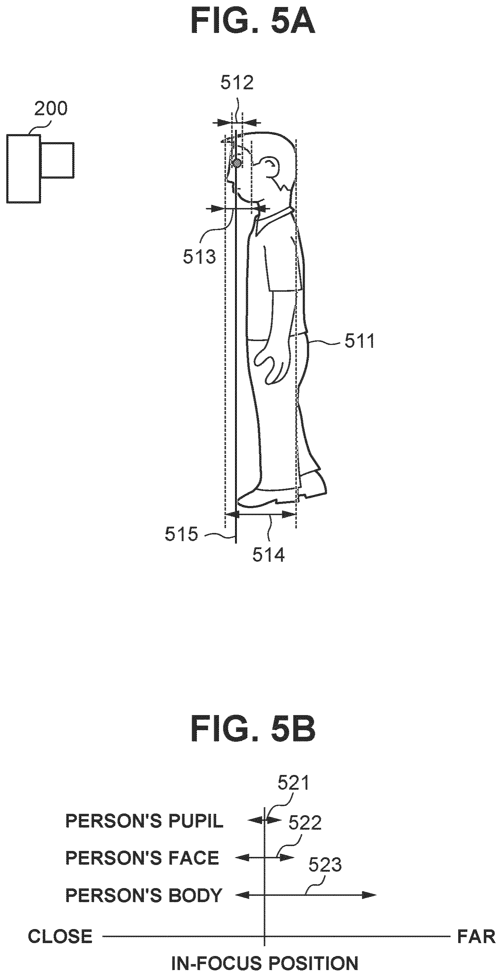

Figs. 5A and 5B are diagrams to be used for the description of a defocus range.

Fig. 5A illustrates a state in which an image of a person 511 is captured using the image capturing apparatus 200. A range 512 in Fig. 5A indicates the spreading of an object (pupil) in a depth direction when a pupil of the person is viewed from the image capturing apparatus 200, and the range 512 corresponds to a value region of a defocus amount of the pupil of the person (i.e., a defocus range of the pupil). Similarly, a range 513 in Fig. 5A indicates the spreading of an object (face) in the depth direction when a face of the person is viewed from the image capturing apparatus 200, and the range 513 corresponds to a region of a defocus amount of the face of the person (i.e., a defocus range of the face). Similarly, a range 514 in Fig. 5A indicates the spreading of an object (body) in the depth direction when a body of the person is viewed from the image capturing apparatus 200, and the range 514 corresponds to a value region of a defocus amount of the body of the person (i.e., a defocus range of the body). An in-focus position 515 in Fig. 5A indicates that an in-focus position of the image capturing apparatus 200 coincides with the range 512 of the pupil of the person.

The system control unit 212 in Fig. 2 calculates a defocus amount using output information of the image sensor 211, and the range estimation unit 103 estimates a defocus range based on the defocus amount. Fig. 5B is a diagram schematically illustrating defocus ranges estimated respectively for the range 512 of the pupil of the person, the range 513 of the face of the person, and the range 514 of the body of the person, which are exemplified in Fig. 5A. A horizontal axis direction in Fig. 5B indicates the magnitude of a defocus amount, and a side close to the image capturing apparatus 200 is defined as "close" and a side far from the image capturing apparatus 200 is defined as "far". A length of a line segment indicated by an arrow in Fig. 5B indicates a defocus range serving as a value region of a defocus amount. Fig. 5B illustrates a defocus range 521 estimated for the range 512 of the pupil in Fig. 5A, a defocus range 522 estimated for the range 513 of the face in Fig. 5A, and a defocus range 523 estimated for the range 514 of the body in Fig. 5A.

In Fig. 5A, for example, regarding the spreading in the depth direction of the body of the person viewed from the image capturing apparatus 200, a closest side corresponds to a tip of nose of the person 511, and a farthest side corresponds to a tip of shoulder of the person 511. Thus, a closest value (largest value) of a defocus amount of the body of the person is a defocus amount indicating the tip of nose of the person 511, and a farthest value (smallest value) of a defocus amount is a defocus amount indicating the tip of shoulder of the person 511. That is, a region defined by such closest value and the farthest value of the defocus amount is a defocus range of the body of the person. In Fig. 5B, the defocus range 523 in the body of the person is estimated from the closest value and the farthest value of the defocus amount. In a case where the above-described product [Fδ] of an F-value of the diaphragm in an imaging optical system and a permissible circle of confusion δ is used as a unit of the defocus amount, a defocus range of the body of the person becomes the range of 0.2Fδ to -1.4Fδ when the closest value is 0.2 Fδ and the farthest value is -1.4 Fδ, for example. Subject defocus range estimation processing to be executed by the range estimation unit 103 will be described in detail below.

Fig. 6 is a flowchart illustrating a detailed flow of imaging assisting processing of displaying an in-focus subject frame in a superimposed manner on a live view image, in accordance with the adjustment of a focus position by a manual operation in the system control unit 212. In the flowchart in Fig. 6, processing partially overlapping the above-described flowchart in Fig. 3 is also illustrated. The processing in the flowchart illustrated in Fig. 6 is performed by each functional unit in Fig. 1 that is formed by the system control unit 212 illustrated in Fig. 2, executing a program according to the present embodiment.

As described above, when the system control unit 212 of the image capturing apparatus 200 receives setting input of a focus position change corresponding to a focus ring operation performed by the photographer, in image capturing in the manual focus mode, the system control unit 212 starts the processing in step S601 and subsequent steps in Fig. 6.

In step S601, the setting unit 101 of the system control unit 212 receives imaging setting input corresponding to focus position adjustment corresponding to a focus ring operation performed by the photographer.

Next, as processing in step S602, the detection unit 102 detects a subject from an image captured by the image sensor 211 with a focus position being adjusted by a manual operation of the photographer. Here, in the present embodiment, a subject to be detected is, for example, a person, a dog, a cat, an automobile, or the like. The type of a subject to be detected by the detection unit 102 can be one type or a plurality of types, or can be a subject preset by the photographer. The detection unit 102 may detect the entirety of a subject, may detect a part of a subject, or may detect the entirety of a subject and each part of the subject. Examples of a detection method of the entirety of a subject or a part of a subject include a detection method that uses a known machine learning technique. For example, an object detector that can detect an object of a specific type or a part of the object is preliminarily created using a technique such as a convolutional neural network (CNN), and the detection unit 102 detects a subject by inputting a captured image of the image sensor 211 to the object detector.

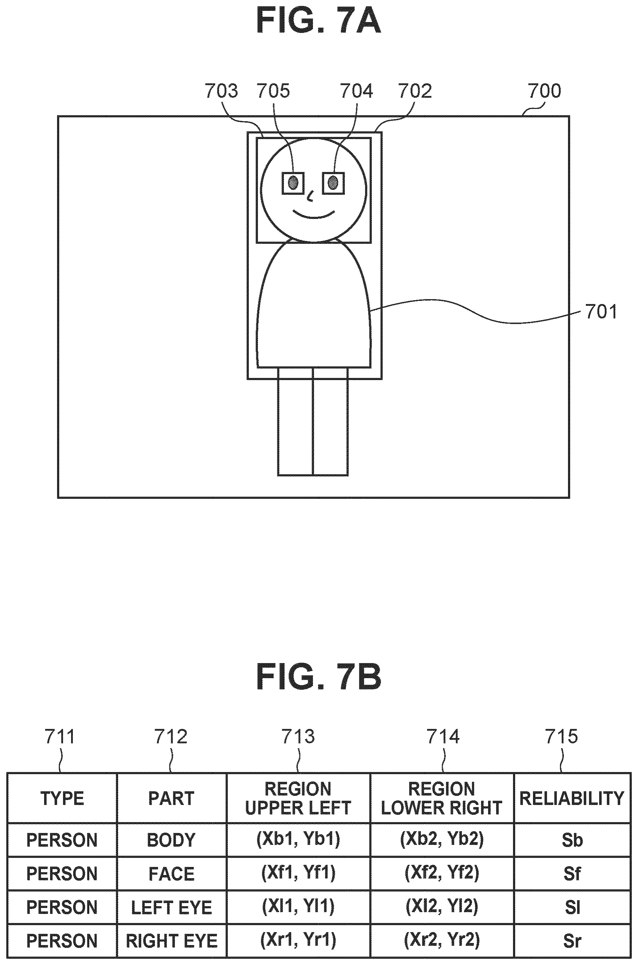

Figs. 7A and 7B are diagrams to be used for the description of an example of subject detection processing.

Fig. 7A is a diagram illustrating an example of a detection result in which a body, a face, a right eye, and a left eye of a person 701 are detected from an image 700 captured by the image sensor 211. The detection unit 102 detects a subject frame as a detection result of a subject. A subject frame 702 is a frame indicating a detection result of a body. Similarly, a subject frame 703 is a frame indicating a detection result of a face, a subject frame 704 is a frame indicating a detection result of a left eye, and a subject frame 705 is a frame indicating a detection result of a right eye.

Fig. 7B is a table indicating subject information generated from the subject frames detected by the detection unit 102. In the table in Fig. 7B, a type of a subject is described on a column 711, a part of a subject is described on a column 712, an upper-left coordinate of a subject frame is described on a column 713, a lower-right coordinate of a subject frame is described on a column 714, and the reliability of a detection result is described on a column 715. The type and the parts of a subject, coordinates of a subject frame, and the reliability of a detection result correspond to information that can be acquired by the above-described object detector that uses a known machine learning technique. In the present embodiment, an example will be described in which a bounding box surrounding a region of a detected subject is set as a subject frame, and coordinates of two points corresponding to the upper left and the lower right of the bounding box are acquired.

After the above-described processing in step S602, the range estimation unit 103 estimates a defocus range of a subject, as the next processing in step S603. The range estimation unit 103 according to the present embodiment estimates a defocus range of each subject, based on an image captured by the image sensor 211, subject information detected by the detection unit 102, and a map (defocus map) of a defocus amount of a region encompassing each subject. In the present embodiment, the defocus map is map information indicating a defocus amount distribution in which a defocus amount is allocated to each pixel of the entirety or a part of an image captured by the image sensor 211.

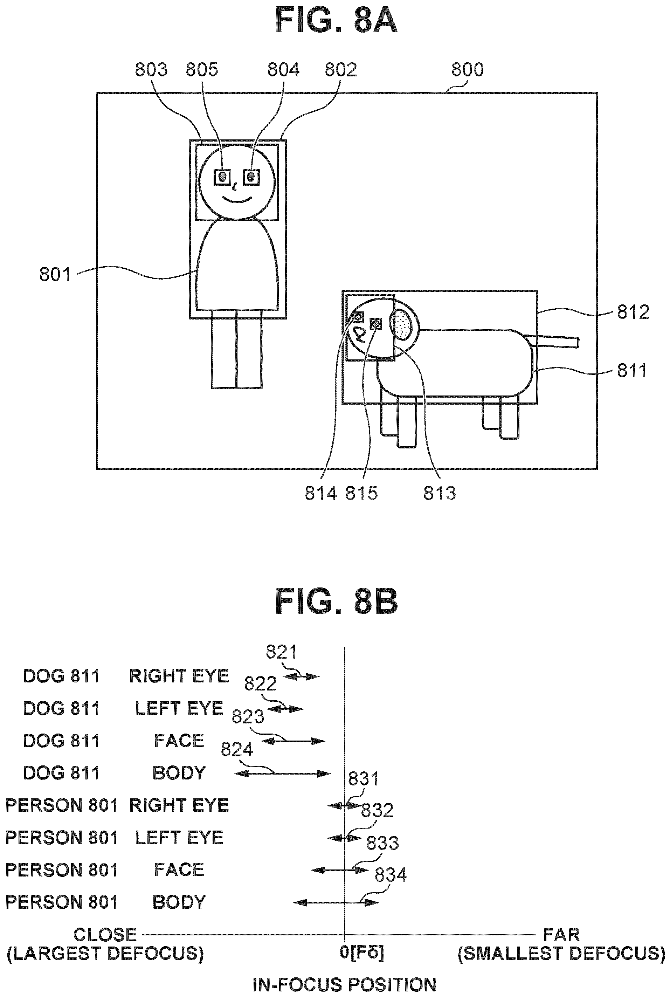

Figs. 8A and 8B are diagrams illustrating an example of an estimation result of a defocus range.

Fig. 8A is a diagram illustrating a detection result in which a person 801 and a dog 811, and parts of the person 801 and the dog 811 are detected from an image 800 captured by the image sensor 211. A subject frame 802 is a frame indicating a detection result of a body of a person. Similarly, a subject frame 803 is a frame indicating a detection result of a face of a person, a subject frame 804 is a frame indicating a detection result of a left eye of a person, and a subject frame 805 is a frame indicating a detection result of a right eye of a person. A subject frame 812 is a frame indicating a detection result of a body of a dog, a subject frame 813 is a frame indicating a detection result of a face of a dog, a subject frame 814 is a frame indicating a detection result of a right eye of a dog, and a subject frame 815 is a frame indicating a detection result of a left eye of a dog.

Fig. 8B is a diagram illustrating an estimation result of a defocus range of the subject illustrated in Fig. 8A. Similarly to the above-described example in Fig. 5B, a length of a line segment indicated by an arrow in Fig. 8B indicates a defocus range, which is a region of a defocus amount. A horizontal axis direction in Fig. 8B indicates the magnitude of a defocus amount, a side close to the image capturing apparatus 200 is defined as "close" and a side far from the image capturing apparatus 200 is defined as "far". Fig. 8B illustrates a defocus range 821 estimated for the right eye of the dog 811. Similarly, Fig. 8B illustrates defocus ranges 822, 823, and 824 estimated respectively for the left eye, the face, and the body of the dog 811. Similarly, Fig. 8B illustrates defocus ranges 831, 832, 833, and 834 estimated respectively for the right eye, the left eye, the face, and the body of the person 801. Both ends of each of these line segments indicate a closest value and a farthest value of a defocus amount, and a larger line segment indicates a wider defocus range. For example, for both of the person 801 and the dog 811, a body is thicker in the depth direction than eyes when viewed from the image capturing apparatus 200. Thus, a defocus range of a body is wider than defocus ranges of eyes.

Here, a defocus range estimation method will be described in more detail.

A defocus range can be acquired by using a machine learning model machine-learned with input learning data. Examples of a specific algorithm of machine learning include, for example, deep learning of generating a feature amount and a connection weighting coefficient by itself using a neural network. Here, learning that uses a neural network will be described.

Input data to be used for learning includes a learning image, a defocus map, a subject region, and a correct defocus range. In the learning, error detection processing and weight update processing are performed.

In the error detection processing, an error obtained between training data and output data output from an output layer of a neural network obtained in accordance with input data input to an input layer. The training data at this time is a correct defocus range. In the error detection processing, the difference between the training data and the output data from the neural network can also be calculated with a loss function.

In the weight update processing, an internode connection weighting coefficient of the neural network, and the like are updated such that the error becomes smaller based on an error obtained in error detection processing. In such weight update processing, a connection weighting coefficient and the like are updated using, for example, an error backpropagation method. The error backpropagation method is a method of adjusting an internode connection weighting coefficient of each neural network and the like such that the above-described error becomes smaller. As a result of the above-described learning, a machine learning model that estimates a defocus range is obtained. By using the machine learning model, it is possible to estimate a defocus range. In the present embodiment, an example of estimating a defocus range including a subject region in the input has been described, but a subject region is not essential as the input. After a defocus range is estimated, a corresponding subject region can also be detected.

After the above-described processing in step S603, the selection unit 104 extracts, as the next processing in step S604, candidates of subjects to be highlighted from among subjects detected by the detection unit 102, based on a defocus range estimated by the range estimation unit 103. In the present embodiment, the selection unit 104 extracts a subject (A), which can be estimated to be currently in focus, and a subject (B), which can be estimated to have a close in-focus position, from subjects detected by the detection unit 102 as candidates of subjects to be highlighted, based on the estimated defocus range. That is, in the present embodiment, subjects to be eventually highlighted are the subject (A) that can be estimated to be currently in focus and the subject (B) that can be estimated to have a close in-focus position.

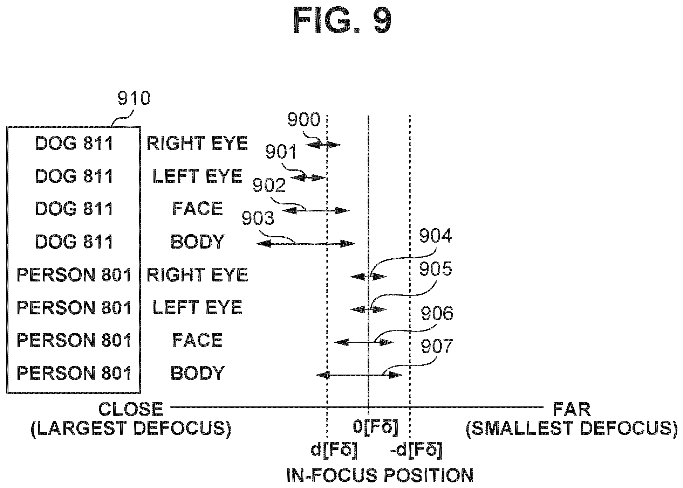

The subject (A) that can be estimated to be currently in focus, and the subject (B) that can be estimated to have a close in-focus position will be described with reference to Fig. 9.

Fig. 9 is a diagram illustrating an estimation result of a defocus range of each of subjects corresponding to the dog 811 and the person 801 illustrated in Fig. 8A, and is a diagram in which explanatory notes are also added to the example in Fig. 8B for the description.

Here, the subject (A) that can be estimated to be in focus is a subject whose current in-focus position falls within the estimated defocus range. When the current in-focus position is represented by a defocus amount in unit of the above-described product [F$\delta$], which is a product of an F-value of the diaphragm in an imaging optical system and a permissible circle of confusion $\delta$, the current in-focus position becomes 0 F$\delta$. When a lower limit of a defocus range is equal to or smaller than 0 F$\delta$, and an upper limit is equal to or smaller than 0 F$\delta$, a focus is put on a subject in the defocus range, accordingly. In other words, when a lower limit and an upper limit of a defocus range are denoted by Fmin and Fmax, respectively, and Fmin $\leq$ 0 and 0 $\leq$ Fmax are satisfied, it can be determined that a subject is in focus. In the case of the example illustrated in Fig. 9, defocus ranges 904, 905, 906, and 907 represented by line segments of arrows in Fig. 9 are defocus ranges of subjects (A) that can be estimated to be in focus. That is, in the case of the subjects exemplified in Fig. 9, the right eye, left eye, face, and body of the person 801 are subjects (A) that can be estimated to be in focus.

In contrast, the subject (B) that can be estimated to have a close in-focus position is a subject whose current in-focus position does not fall within an estimated defocus range, but a difference between a lower limit or an upper limit of a defocus range and the in-focus position is equal to or smaller than a threshold value. In other words, the subject (B) that can be estimated to have a close in-focus position is a subject with a high focus degree. When a threshold value is denoted by th, $0 < Fmin$ or $Fmax < 0$ is satisfied, and $|Fmin| \leq th$ or $|Fmax| \leq th$ is also satisfied, it can be determined that the in-focus position is close. In the case of the example illustrated in Fig. 9, defocus ranges 900, 902, and 903 represented by line segments of arrows in Fig. 9 are defocus ranges of subjects (B) that can be estimated to have a close in-focus position. That is, in the case of the subjects exemplified in Fig. 9, the right eye, face, and body of the dog 811 are subjects (B) that can be estimated to have a close in-focus position.

After the above-described processing in step S604, the selection unit 104 determines, as the next processing in step S605, a subject to be actually highlighted, from among candidate subjects to be highlighted that have been extracted in step S604. In the present embodiment, by making selection from among a plurality of candidate subjects to narrow down a subject to be actually highlighted, information that is more important for the photographer is preferentially displayed, and display not impairing visibility is enabled.

Determination processing for a subject to be highlighted will be described with reference to Fig. 9 described above.

Because highlighting a plurality of parts of the same subject is redundant processing, the selection unit 104 narrows down a subject to be highlighted, for the defocus ranges 904, 905, 906, and 907 of the above-described subjects (A) that can be estimated to be in focus. For example, the selection unit 104 focuses attention on a type 910 of a subject, and selects a part of a subject with a narrowest defocus range among subjects of the same type, as a subject to be highlighted. Nevertheless, in a case where a difference equal to or larger than a predefined threshold value is not included, or the like, it is not necessary to always limit subjects to one, and a plurality of defocus ranges can also be selected. In the case of the example in Fig. 9, the selection unit 104 selects the defocus ranges 904 and 905 serving as narrowest ranges among the defocus ranges 904 to 907 of the person 801, and determines the right eye and the left eye of the person 801, which are subjects corresponding to the ranges, as subjects to be highlighted.

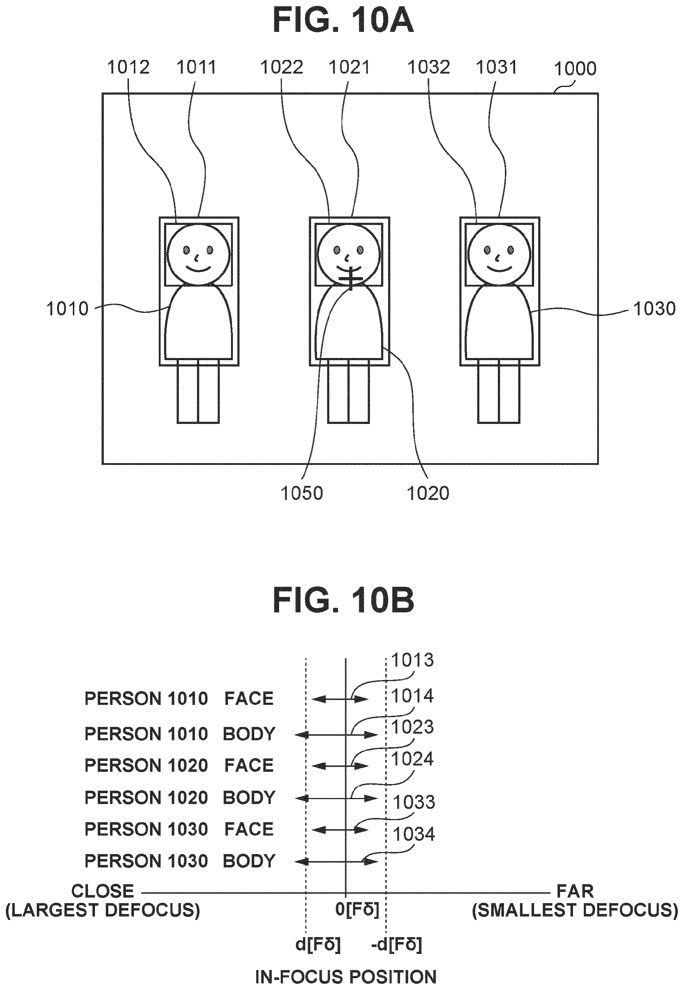

Fig. 10A is a diagram illustrating an example in which a plurality of in-focus subjects (e.g., persons 1010, 1020, and 1030) each includes a body and a face. In Fig. 10A, an image 1000 captured by the image sensor 211 includes the plurality of persons 1010, 1020, and 1030. Fig. 10A illustrates subject frames indicating detected parts of the persons 1010, 1020, and 1030. A subject frame 1011 is a frame indicating a detection result of a body of the person 1010, and a subject frame 1012 is a frame indicating a detection result of a face of the person 1010. Similarly, a subject frame 1021 is a frame indicating a detection result of a body of the person 1020, a subject frame 1022 is a frame indicating a detection result of a face of the person 1020, a subject frame 1031 is a frame indicating a detection result of a body of the person 1030, and a subject frame 1032 is a frame indicating a detection result of a face of the person 1030.

Similarly to the above-described example in Fig. 8B, Fig. 10B is a diagram illustrating an estimation result of a defocus range of a subject illustrated in Fig. 10A, and a length of each line segment indicated by an arrow in Fig. 10B indicates a defocus range. Fig. 10B illustrates defocus ranges 1013 and 1014, 1023 and 1024, and 1033 and 1034 estimated for the faces and bodies of the persons 1010, 1020, and 1013, respectively.

For example, in a case where a narrower defocus range is selected from among defocus ranges of the same subject (e.g., a face), subject frames of faces corresponding to the defocus ranges 1013, 1023, and 1033 are selected and highlighted. Nevertheless, when such plurality of subjects (subject frames of a plurality of faces) is highlighted, visibility from the photographer declines. Thus, the plurality of subjects can be further narrowed down by providing a condition. For example, the selection unit 104 can preferentially select a subject close to a specific region. In the case of Figs. 10A and 10B, the selection unit 104 can use, for example, a center 1050 of the image 1000 as a specific region, and select only the subject frame 1022 of the face, which is a subject close to the center 1050. Alternatively, for example, the selection unit 104 can use a region other than the center of the image, such as a region preliminarily selected by the photographer, as a specific region, and select a subject frame based on a distance from the selected region by the photographer. Because the processing in step S605 is processing for enhancing the visibility of subject display in a specific situation where a plurality of subject frames of the same subject exists, for example, the processing can be omitted for the simplification of processing.

After the above-described processing in step S605, the output unit 105 highlights, as the next processing in step S606, a subject selected so far by the selection unit 104 in the processing (step) on a live view image. In the case of the example in the present embodiment, the output unit 105 displays a bounding box, such as the subject frame 702 in Fig. 7 that has been detected by the detection unit 102 in step S602, in a highlighted manner, and superimposes the bounding box on a subject on a live view image. A method of highlighting a subject is not limited to the display of a bounding box, and can also be a method of extracting an outline of a subject using a known image processing technique, and highlighting the outline, or the like.

The output unit 105 can also adjust a degree of highlighting based on a focus degree of a subject at the time of highlighting a subject frame. For example, the output unit 105 can also highlight a subject frame of an in-focus subject most intensively, highlight a subject frame of a subject with a defocus range closer to an in-focus position more intensively, or highlight a subject frame of a subject with a defocus range farther from an in-focus position more weakly. In other words, the output unit 105 can adjust a degree of highlighting to become higher as a focus degree of a subject becomes higher. Another method of highlighting can also be display or the like with gradually changing a line width, line type, line color, density, transparency, luminance, or the like, for example.

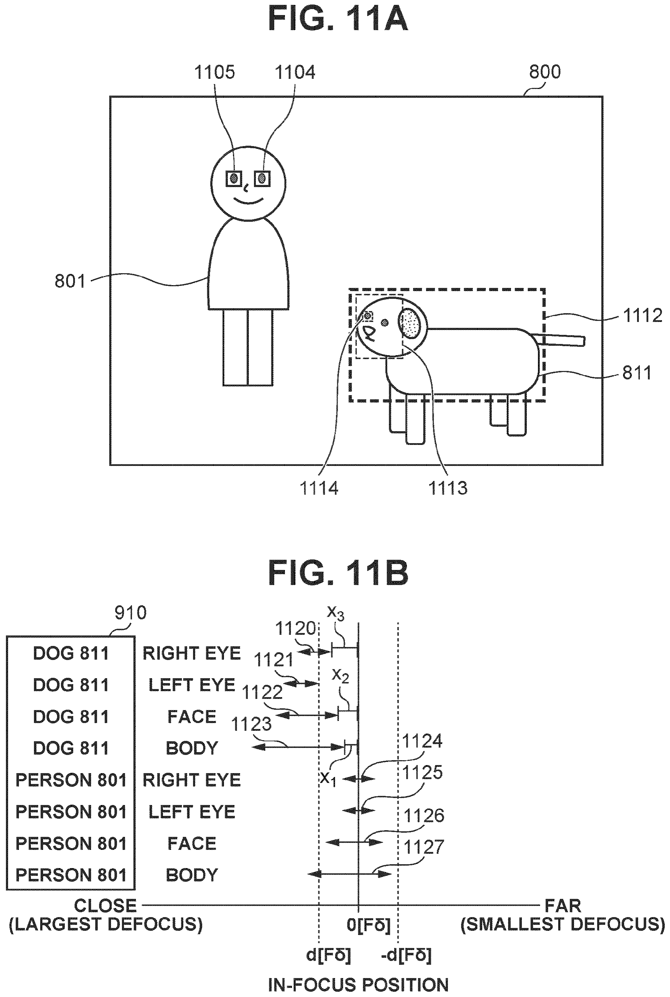

Figs. 11A and 11B are diagrams illustrating an example of highlighting a subject example of the person 801 and the dog 811 exemplified in Fig. 8A.

Fig. 11A illustrates an example in which a subject frame is highlighted. Fig. 11B is a diagram illustrating a defocus range estimated for each subject exemplified in Fig. 11A. Subject frames 1104 and 1105 in Fig. 11A are frames respectively corresponding to in-focus defocus ranges 1125 and 1124. Specifically, the subject frames 1104 and 1105 are frames indicating the left eye and the right eye of the person 801. Fig. 11A illustrates an example in which the subject frames 1104 and 1105 are highlighted by drawing the subject frames with solid lines with the thickest line width.

Alternatively, highlighting display can also be performed such that subject frames 1112, 1113, and 1114 of subjects that are not in focus but have in-focus positions closer to some extent are gradually highlighted. Defocus ranges respectively corresponding to these subject frames 1112, 1113, and 1114 are defocus ranges 1123, 1122, and 1120. Here, distances (differences) between the defocus ranges 1123, 1122, and 1120 corresponding to the subject frames 1112, 1113, and 1114, and their in-focus positions are distances x1, x2, and x3 as illustrated in Fig. 11B. A magnitude relation of the distances x1, x2, and x3 is also x1 < x2 < x3. The output unit 105 can execute highlighting in a stepwise manner to thicken a line width in accordance with the order of the distances x1, x2, and x3 between the defocus ranges 1123, 1122, and 1120 corresponding to the subject frames 1112, 1113, and 1114, and in-focus positions thereof. In this manner, changing gradually and linearly a highlighting degree based on a distance between an in-focus position and a defocus range makes it easier for the photographer to intuitively recognize a focus degree in focus adjustment.

Examples of gradually changing a thickness of a subject frame in accordance with a distance between an in-focus position and a defocus range include an example of linearly changing the thickness of a subject frame from a thickness wmax with the largest highlighting degree, to a thickness wmin with the smallest highlighting degree. In the case of this example, a thickness w of a subject frame corresponding to a defocus range with the distance x from the in-focus position can be obtained by the following formula (1). In formula (1), a threshold value at which the distance x between an in-focus position and a defocus range is determined to be close is denoted by d, and relationship between the threshold value d and the distance x satisfies 0 < x < d.

$$w = wmax - (x/d) \times (wmax - wmin) \quad (1)$$

In the above-described example, the case of changing the thickness of a line has been described, but it is also possible to represent a highlighting degree by changing a line type, for example. Nevertheless, the number of available line types is limited to some extent, and thus, in the case of changing a line type, there is a possibility that the number of change steps of highlight display becomes smaller than that in the case of changing the thickness of a line. In the case of the example of changing a line type, the number of change steps of highlight display can be defined by providing a demarcation to some extent such as using a solid line when $0 < (x/d) \leq 0.2$ is satisfied, and using a long dot-dash-line when $0.2 < (x/d) \leq 0.4$ is satisfied, for example.

After the above-described processing in step S606, the system control unit 212 determines whether to continue image capturing as the next processing in step S607. Unless an image capturing end instruction is issued by the photographer, the system control unit 212 determines to continue image capturing (YES in step S607), and the processing returns to step S601 to repeatedly execute the processing in steps S601 to S605. When an image capturing end instruction is input from the photographer (NO in step S607), the system control unit 212 ends the processing in the flowchart in Fig. 6.

According to the above-described first embodiment, it is possible to present an in-focus subject to the photographer in an easy-to-understand manner. In the present embodiment, presenting also a subject out-of-focus only by little to the photographer makes it possible to present a subject to be focused, to the photographer in an easy-to-understand manner when the photographer performs adjustment of focusing with a manual operation. In other words, according to the image capturing apparatus 200 according to the present embodiment, the convenience improves in a case where the photographer performs focus adjustment by a manual operation in the manual focus mode.

<Modified Example of First Embodiment>

In the above-described first embodiment, an example of changing a highlighting degree according to an in-focus position and a focus degree has been described, but an in-focus position and a focus degree can also be presented by the display or output of means other than a subject frame. In a modified example of the first embodiment, an example of presenting information indicating an in-focus position and a focus degree, to the photographer by the display or output of means other than a subject frame will be described focusing on a difference from the first embodiment.

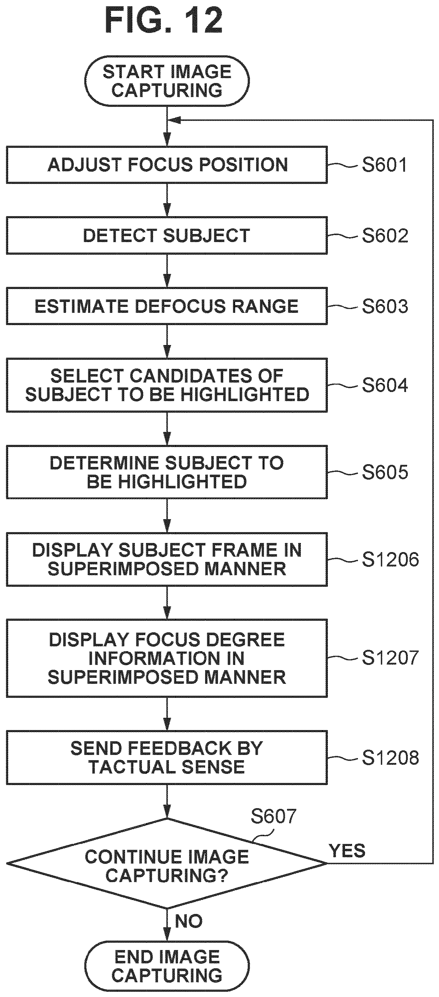

Fig. 12 is a flowchart illustrating a flow of processing according to the present modified example of presenting information indicating an in-focus position and a focus degree adapted to focus position adjustment performed by a manual operation, to the photographer by the display or output of means other than a subject frame in the image capturing apparatus 200. The configuration of each functional unit that executes the imaging assisting processing in Fig. 12 is the same as that in the block diagram illustrated in Fig. 1, and thus illustrations and descriptions thereof will be omitted. The system control unit 212 in Fig. 2 implements each functional unit according to this modified example that is illustrated in Fig. 1, by executing processing in accordance with the flowchart in Fig. 12. The processing in steps S601 to S605 and S607 of the flowchart in Fig. 12 is the same as the above-described processing of the flowchart in Fig. 6, and thus the description thereof will be omitted. In the case of the flowchart in Fig. 12 according to this modified example Fig. 12, the output unit 105 performs processing in step S1206 after the processing in step S605.

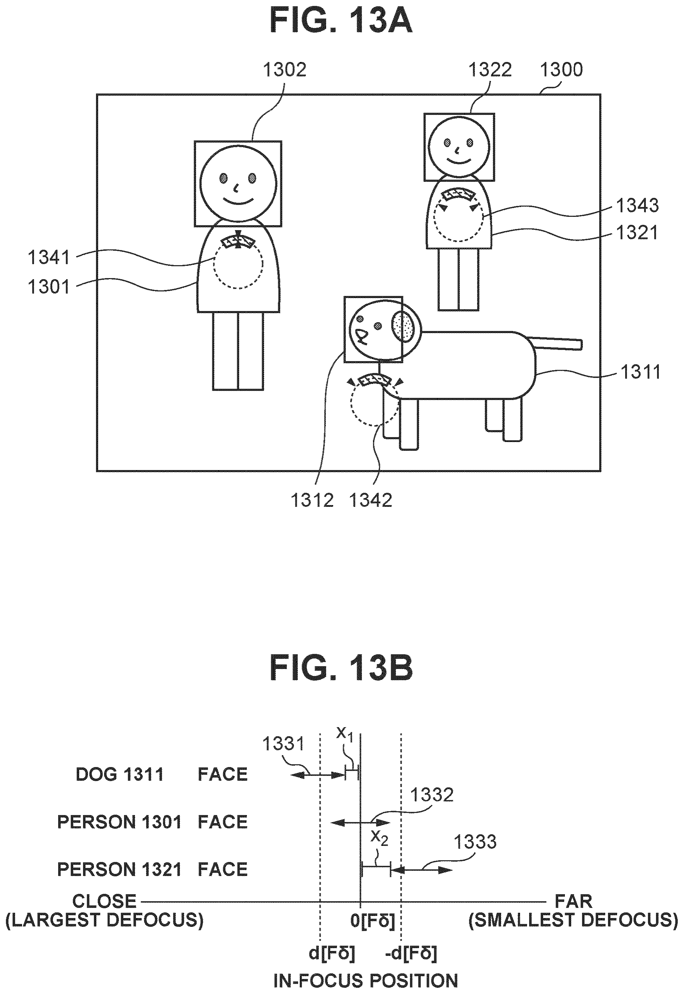

Figs. 13A and 13B are diagrams to be used for the description of imaging assisting processing according to the present modified example.

Fig. 13A is a diagram illustrating an example in which a plurality of subjects (persons 1301 and 1321, and a dog 1311) appear in an image 1300 captured by the image sensor 211, and subject frames indicating detected parts of the plurality of subjects are displayed. In the example illustrated in Fig. 13A, a subject frame 1302 of a face of the person 1301, a subject frame 1322 of a face of the person 1321, and a subject frame 1312 of a face of the dog 1311 are detected.

Fig. 13B is a diagram illustrating an estimation result of a defocus range of each subject illustrated in Fig. 13A, similarly to Figs. 9 and 10B described above. The length of each line segment indicated by an arrow in Fig. 13B indicates a defocus range. Fig. 13B illustrates defocus ranges 1331, 1332, and 1333 estimated respectively for the faces of the dog 1311, the person 1301, and the person 1321. In the case of the example illustrated in Fig. 13B, the defocus range 1332 is a defocus range including an in-focus position, and thus it can be seen that the face of the person 1301 is in focus. In contrast, for example, in the defocus range 1331, it can be seen that a corresponding subject is located in front of an in-focus position. For example, in the defocus range 1333, it can be seen that a corresponding subject is located on the back side of an in-focus position.

In the flowchart in Fig. 12, when the processing proceeds to step S1206 after the processing in step S605, the output unit 105 displays the subject frames 1302, 1312, and 1322 to be highlighted that have been determined in the processing up to step S605, and superimposes the subject frames on a live view image. Nevertheless, in the case of the present modified example, degrees of highlighting the subject frames 1302, 1312, and 1322 are not varied unlike the above-described example in the first embodiment.

In the case of the present modified example, the output unit 105 displays, as the next processing in step S1207, images of focus guides 1341, 1342, and 1343 illustrated in Fig. 13A to be superimposed on a live view image, as information indicating an in-focus position and a focus degree. In the example illustrated in Fig. 13A, the focus guide 1341 indicates an in-focus position and a focus degree in a region indicated by the subject frame 1302 of the face of the person 1301. Similarly, the focus guide 1342 indicates an in-focus position and a focus degree in a region indicated by the subject frame 1312 of the face of the dog 1311, and the focus guide 1343 indicates an in-focus position and a focus degree in a region indicated by the subject frame 1322 of the face of the person 1321.

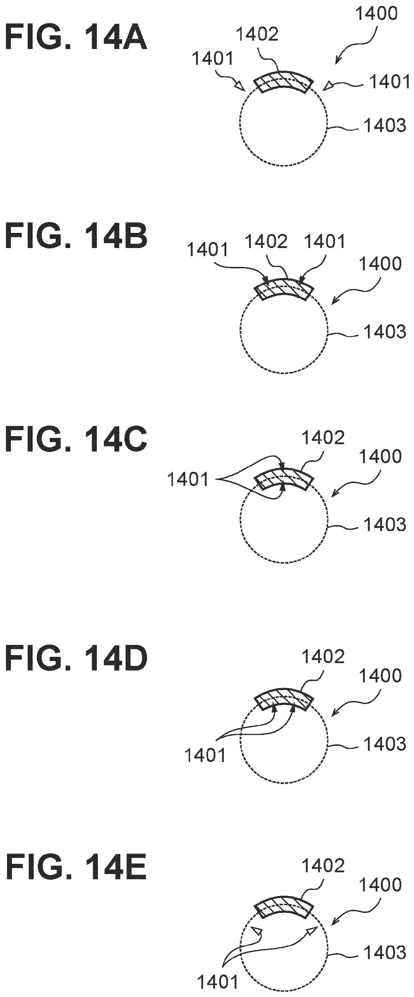

Figs. 14A to 14E are diagrams to be used for the description of a focus guide 1400.

Figs. 14A to 14E illustrate an in-focus position and how to represent a difference in an in-focus position on the focus guide 1400, for the same defocus range.

In the focus guide 1400 illustrated in Figs. 14A to 14E, a belt-like index 1402 indicates a defocus range. The output unit 105 determines the length of the belt-like index 1402 on a circle 1403 of the focus guide 1400 (the length of an arc on the circle 1403) in accordance with the magnitude of a defocus amount. In other words, the magnitude of a defocus amount is represented by the length of the arc of the belt-like index 1402 on the circle 1403 on the focus guide 1400.

In the focus guide 1400 illustrated in Figs. 14A to 14E, triangular indices 1401 indicate in-focus positions, and two triangular indices 1401 are displayed at symmetrical positions to enhance the visibility of the photographer. The output unit 105 determines an interval between the two triangular indices 1401 on the circle 1403 of the focus guide 1400 (the length of the arc on the circle 1403) in accordance with the magnitude of a defocus amount. In other words, the magnitude of a defocus amount is represented by the length of the arc between the two triangular indices 1401 on the circle 1403 of the focus guide 1400. The output unit 105 also changes the position of the two triangular indices 1401 along the circle 1403 of the focus guide 1400 in accordance with in-focus position adjustment performed by a manual operation of the photographer. For example, when the photographer operates a focus ring to change a focus position, the output unit 105 changes the position of the two left and right triangular indices 1401 along the circle 1403 in a direction in which the triangular indices 1401 get closer to each other, or in a direction in which the triangular indices 1401 get away from each other. In a case where an in-focus position is located on a distant side of the center of a defocus range, the output unit 105 arranges the two triangular indices 1401 on the outside of the circle 1403. In other words, it is represented that an in-focus position exists on the distant side of the center of a defocus range by the two triangular indices 1401 existing on the outside of the circle 1403.

Fig. 14A is a diagram illustrating an example of the focus guide 1400 in a case where an in-focus position exists on the distant side of a defocus range indicated by the belt-like index 1402. In a case where the in-focus position exists on the outside of the defocus range, the output unit 105 displays the two triangular indices 1401 in white, for example.

Fig. 14B is a diagram illustrating an example of the focus guide 1400 in a case where an in-focus position moves in a close direction and gets closer to the defocus range more than that of the example of the focus guide 1400 in Fig. 14A, and the in-focus position falls within the defocus range. In this manner, in a case where the in-focus position falls within the defocus range, the output unit 105 changes the color of the triangular indices 1401 from white to green, for example, to present an in-focus state to the photographer.

Fig. 14C is a diagram illustrating an example of the focus guide 1400 in a case where an in-focus position further moves in the close direction more than that of the example in Fig. 14B, and the in-focus position exists substantially at the center of the defocus range represented by the belt-like index 1402. In a case where the in-focus position exists substantially at the center of the defocus range, the output unit 105 presents, to the photographer, that the in-focus position exists at the center of the defocus range by displaying the two triangular indices 1401 arranged on both of the outside and inside of the circle 1403.

Fig. 14D is a diagram illustrating an example of the focus guide 1400 in a case where an in-focus position further moves in the close direction more than the example in Fig. 14C, and the in-focus position exists on the close direction side of the center of the defocus range represented by the belt-like index 1402. Nevertheless, the example in Fig. 14D illustrates that a state in which the in-focus position still exists within the defocus range. In a case where the in-focus position exists on the close direction side of the center of the defocus range and within the defocus range, the output unit 105 displays the two triangular indices 1401 to be arranged on the inside of the circle 1403.

Fig. 14E is a diagram illustrating an example of the focus guide 1400 in a case where an in-focus position further moves in the closer direction more than that of the example in Fig. 14D, and the in-focus position falls outside the defocus range.

In a case where the in-focus position moves in the closer direction with respect to the center of the defocus range and falls outside the defocus range, the output unit 105 changes the color of the two triangular indices 1401 from green to white to present an out-of-focus state to the photographer. By arranging the two triangular indices 1401 at this time on the inside of the circle 1403, the photographer can recognize that the in-focus position exists on the close direction side of the center of the defocus range and falls outside the defocus range.

In Figs. 14A to 14E, the defocus range indicated by the belt-like index 1402 is illustrated as a constant range without a change to simplify the illustration. However, the range estimation unit 103 actually estimates a defocus range as needed, and the defocus range consequently changes constantly. A change in the defocus range is also caused by a change in focus position made by the photographer, a change in diaphragm, a change in the position of a subject or an image capturing apparatus, a change in subject shape, and the like. For this reason, the output unit 105 actually adjusts the length of the arc of the belt-like index 1402 as needed in accordance with the change in defocus range. At the time, the output unit 105 changes the length of the arc of the belt-like index 1402 indicating the defocus range, without changing the position of the triangular index 1401 that indicates an in-focus position. In the present modified example, the magnitude of the defocus amount is represented by the length of the arc of the belt-like index 1402 on the circle 1403, and thus the length of the belt-like index is determined based on a ratio between an in-focus position and a defocus amount at the boundary of the defocus range, with reference to an in-focus position and the center of the defocus range. The position of an index indicating the above-described in-focus position is not moved if the photographer has not moved a focus ring, and if the photographer has moved a focus ring, the position of the index is changed in accordance with a rotation amount. In this manner, in the focus guide according to the present modified example, the display enables the photographer to intuitively feel that the position of the focus ring is the position of an index indicating an in-focus position by giving consistency to the position of an index indicating an in-focus position.

In the above-described example in Fig. 13A, an example in which focus guides are displayed near (e.g., below) all subject frames is illustrated, but the example is not limited to this. For example, one common focus guide can be displayed for a plurality of parts included in the entire one subject, and a plurality of defocus ranges respectively corresponding to a plurality of parts can also be displayed within the one focus guide. This can prevent the occurrence of a state in which a plurality of focus guides is displayed near subject frames, and the visibility of the photographer is impaired, for example.

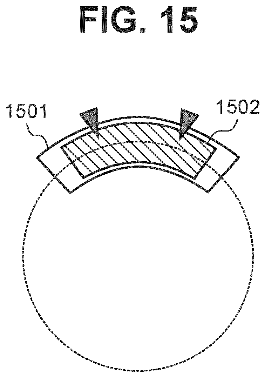

Fig. 15 is a diagram illustrating an example of displaying a plurality of defocus ranges on one focus guide. In Fig. 15, for example, a belt-like index 1501 indicates a defocus range of a body of a person, and a belt-like index 1502 indicates a defocus range of a part (e.g., face) of the same person. In this case, the output unit 105 displays the belt-like indices 1501 and 1502 indicating the plurality of defocus ranges, in a distinguishable manner using different colors, transparencies, luminance, or the like, for example.

The output unit 105 can also adjust a degree of highlighting a focus guide based on a distance between a defocus range and an in-focus position. By adjusting a degree of highlighting a focus guide, it becomes possible to display a defocus range having a high degree of interest for the photographer, with being highlighted. For example, in a case where there are a subject with a narrow defocus range and a subject with a wide defocus range, it is considered that the subject with a narrow defocus range is more likely to be a subject desired to be focused. For this reason, the output unit 105 can perform highlight display in a focus guide such that a defocus range of the subject with a narrow defocus range is more highlighted.

The output unit 105 can also adjust the length of a belt-like index indicating a defocus range desired to be displayed, as appropriate depending on whether a position of a subject and an in-focus position exist closer to the close side or the distant side of the center of the defocus range, and the like.

Furthermore, the output unit 105 can also integrate defocus ranges with similar magnitudes into one belt-like index as an attempt for improving visibility. For example, defocus ranges of a right eye and a left eye of a person facing the front side can be collectively displayed as one belt-like index.

After the above-described processing in step S1207, the output unit 105 sends, as the next processing in step S1208, a feedback indicating that an in-focus position has exceeded the boundary of the defocus range, to the photographer by tactual sense. As an example, when the photographer changes an in-focus position by turning the focus ring, and the in-focus position falls within the defocus range, the output unit 105 notifies the photographer that the in-focus position falls within the defocus range by slightly vibrating a focus ring. In this manner, using a method other than the highlight display as in the above-described first embodiment to notify the photographer that the in-focus position falls within the defocus range makes it easier for the photographer to recognize a focus degree even in a case where a lot of information is displayed on a screen. The feedback to the photographer by tactual sense can also be performed by the change of rotational resistance of the focus ring, sound output, the vibration of a linked device worn by the photographer, or the like. After the processing in step S1208, the system control unit 212 advances the processing to step S607 similar to the above-described processing.

In the present modified example, an example of transmitting an in-focus position and a focus degree to the photographer by a combination of the screen display of a focus guide and the feedback by tactual sense has been described. However, the transmission to the photographer can also be performed by a method other than the screen display (i.e., using only tactual sense). In this manner, suppressing information display on a screen enables the photographer to capture an image without impairing subject visibility.

As described above, according to the modified example of the first embodiment, it is possible to more intuitively notify the photographer which of the subjects is currently in focus.

<Second Embodiment>

As a second embodiment, an example of starting autofocusing based on an in-focus defocus range will now be described mainly focused on a difference from the first embodiment.

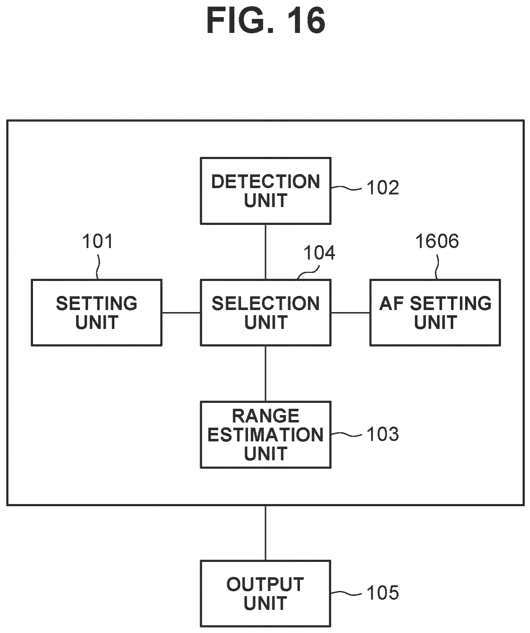

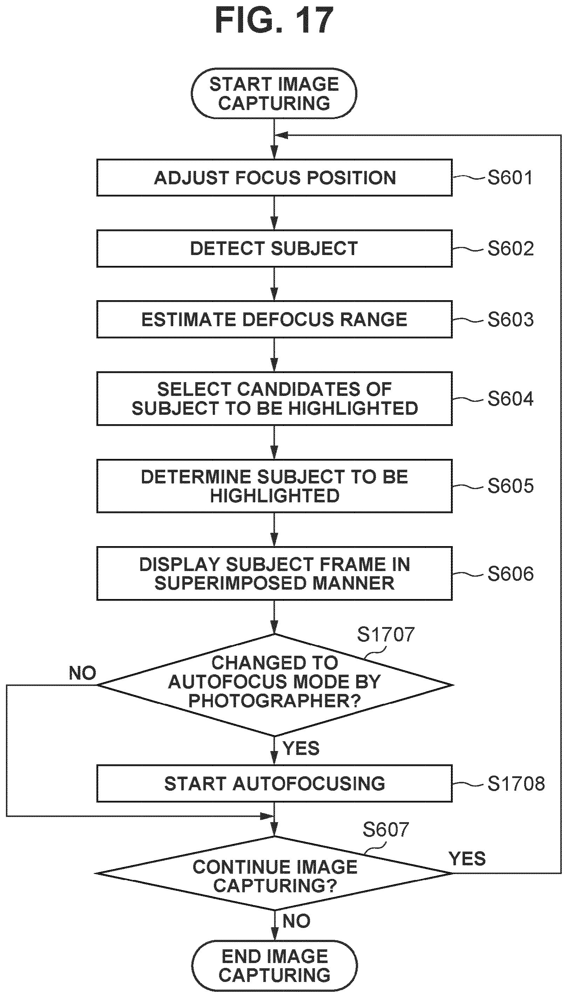

Fig. 16 is a block diagram illustrating a configuration example of each functional unit in an image capturing apparatus according to the second embodiment. As illustrated in Fig. 16, the image capturing apparatus according to the second embodiment includes a setting unit 101, a detection unit 102, a selection unit 104, a range estimation unit 103, and an output unit 105 that are similar to those described in the first embodiment, and also includes an AF setting unit 1606 in addition to these units. Fig. 17 is a flowchart illustrating a flow of processing to be performed by an imaging assistance device according to the second embodiment. Each functional unit in Fig. 16 is implemented by the system control unit 212 with the above-described hardware configuration in Fig. 2 executing processing in accordance with flowchart illustrated in Fig. 17. In the flowchart in Fig. 17, the processing in steps S601 to S606 and S607 is the same processing as the processing described with reference to Fig. 6. Thus, the description thereof will be omitted. In the case of the flowchart in Fig. 17, the AF setting unit 1606 performs the processing in step S1707 and subsequent steps after the processing in step S606.

As processing in step S1707, the AF setting unit 1606 determines whether an autofocus function is enabled by the photographer. In other words, the AF setting unit 1606 determines whether a change to an autofocus mode from the state in the above-described manual focus mode has been performed. In a case where the autofocus function has been enabled by the photographer (YES in step S1707), the AF setting unit 1606 subsequently executes the processing in step S1708. In contrast, in a case where the autofocus function has not been enabled by the photographer (NO in step S1707), the AF setting unit 1606 advances the processing to step S607 by skipping the processing in step S1708. The enabling of the autofocus function by the photographer can be input made using a dedicated button provided on the image capturing apparatus 200, or input made using a touch panel 218, for example, and is not limited.

In step S1708, the AF setting unit 1606 sets a target on which focus tracking is to be performed by the autofocus function. A known technique can be used for the autofocusing method, and the description thereof will be omitted here. The target on which focus tracking is to be performed is a subject with the smallest distance between a corresponding defocus range and an in-focus position among subjects determined in step S605 to be highlighted. Nevertheless, in a case where there is a plurality of applicable subjects, the AF setting unit 1606 selects one from the applicable subjects. In the case of the present embodiment, the AF setting unit 1606 selects one subject at random from among a plurality of subjects, for example. Aside from this, the AF setting unit 1606 can preferentially select a subject on which focus tracking can easily be performed, in view of an autofocusing method, for example, based on the size of a subject frame, a variation in defocus amount within a subject region, luminance, or the like.

For example, in the above-described case as illustrated in Fig. 11A, defocus ranges with the smallest distance from an in-focus position are the defocus ranges 1124 and 1125, which correspond to the subject frames 1105 and 1104 corresponding to the eyes of the person. Accordingly, the AF setting unit 1606 sets either subject frame of these (e.g., the subject frame 1105) as a tracking target of autofocusing. The AF setting unit 1606 then starts subject tracking by autofocusing. After the processing in step S1708, the system control unit 212 advances the processing to the above-described processing in step S607.

According to the second embodiment described above, it is possible to select a subject on which a focus is intuitively put by the photographer with a manual operation, also as a subject to be tracked by autofocusing.

The present disclosure can also be implemented by processing of supplying a program for implementing one or more functions of the above-described embodiments, to a system or an apparatus via a network or a storage medium, and one or more processors in a computer of the system or the apparatus, reading out and executing the program. Alternatively, the present disclosure can also be implemented by a circuit implementing one or more functions (e.g., application specific integrated circuit (ASIC)). All of the above-described embodiments merely indicate examples of embodiment in carrying out the present disclosure, and the technical scope of the present disclosure is not to be construed in a limited manner based on these. In other words, the present disclosure can be executed in various forms without departing from its technical idea or a major feature thereof.

The disclosure of each embodiment includes the following configuration, method, and program.

(Configuration 1)

An imaging assistance device comprising:

a detection unit configured to detect a subject from a captured image obtained by image capturing in accordance with an input of an imaging setting related at least to focusing;

an estimation unit configured to estimate a defocus range indicating a region of a defocus amount of the subject;

a selection unit configured to select at least one subject from among subjects detected by the detection unit, based on a detection result of the subject and an estimation result of the defocus range; and

an output unit configured to output information regarding the focusing on the selected subject.

(Configuration 2)

The imaging assistance device according to Configuration 1,

in which the input of the imaging setting is an input of changing a focus position with a manual operation performed by a user, and

in which the selection unit selects the subject based on a detection result of the subject, an estimation result of the defocus range, and the focus position.

(Configuration 3)

The imaging assistance device according to Configuration 1 or 2,

in which, based on a defocus amount of a plurality of parts included in one subject, the estimation unit estimates the defocus range for each of the plurality of the parts,

in which the selection unit selects a part with the narrower estimated defocus range from among the plurality of the parts, and

in which the output unit outputs the information regarding the focusing on the selected part.

(Configuration 4)

The imaging assistance device according to any one of Configurations 1 to 3, in which the selection unit performs selection of the subject based also on a position of the subject in the captured image in addition to a detection result of the subject and an estimation result of the defocus range.

(Configuration 5)

The imaging assistance device according to any one of Configurations 1 to 4, in which the selection unit performs selection of the subject based on a position of the subject with respect to a specific region in the captured image.

(Configuration 6)

The imaging assistance device according to Configuration 5, in which the selection unit performs selection while prioritizing a subject with a close position with respect to the specific region.

(Configuration 7)

The imaging assistance device according to any one Configurations 1 to 6, in which, as an output of the information regarding the focusing, the output unit displays the subject selected by the selection unit in a highlighted manner.

(Configuration 8)

The imaging assistance device according to any one of Configurations 1 to 7, in which the output unit gradually changes the highlighted display of the subject selected by the selection unit, based on a focus degree on the subject.

(Configuration 9)

The imaging assistance device according to Configuration 8, in which the output unit makes a highlight degree of the highlighted display higher as the focus degree on the subject gets higher.

(Configuration 10)

The imaging assistance device according to any one of Configurations 1 to 6, in which, as an output of the information regarding the focusing, the output unit displays a first index indicating an in-focus position of the selected subject, and a second index indicating an estimation result of the defocus range, near the selected subject.

(Configuration 11)

The imaging assistance device according to Configuration 10, in which the output unit displays an image in which the first index and the second index are arranged in accordance with an arc of a circle.

(Configuration 12)

The imaging assistance device according to Configuration 11, in which the output unit changes a position of the first index with respect to the arc of the circle in accordance with a change in the in-focus position, and changes a length of the second index with respect to the arc of the circle in accordance with a change in the defocus range.

(Configuration 13)

The imaging assistance device according to Configuration 10, in which the output unit displays the first index in a highlighted manner in accordance with a change in the in-focus position, and displays the second index in a highlighted manner in accordance with a change in the defocus range.

(Configuration 14)

The imaging assistance device according to any one of Configurations 10 to 13, in which the output unit displays one set of the first index and the second index for a plurality of parts included in one subject.

(Configuration 15)

The imaging assistance device according to any one of Configurations 1 to 6, in which the output unit outputs the information regarding the focusing as tactual sense to a user.

(Configuration 16)

The imaging assistance device according to Configuration 15, in which the output unit performs the output of the information regarding the focusing by the tactual sense, based on an in-focus position of the selected subject and an estimation result of the defocus range.

(Configuration 17)

The imaging assistance device according to Configuration 16, in which, when the in-focus position falls within the defocus range, the output unit performs the output by the tactual sense.

(Configuration 18)

The imaging assistance device according to any one of Configurations 1 to 17, further comprising a setting unit configured to set an autofocus function with the selected subject being set to a focus tracking target.

(Method 1)

An imaging assistance method comprising:

detecting a subject from a captured image obtained by image capturing in accordance with an input of an imaging setting related at least to focusing;
estimating a defocus range indicating a region of a defocus amount of the subject;
selecting at least one subject from among subjects detected by the detecting, based on a detection result of the subject and an estimation result of the defocus range; and
outputting information regarding the focusing on the selected subject.

(Program 1)

A program that causes a computer to function as the imaging assistance device according to any one of Configurations 1 to 18.

According to the present disclosure, it becomes possible to present an in-focus subject to the photographer.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An imaging assistance device comprising:

at least one processor; and
at least one memory having stored thereon instructions which, when executed by the at least one processor, cause an image assistance device at least to:

detect a plurality of subjects from a captured image obtained by image capturing in accordance with an input of an imaging setting related at least to focusing;
estimate a defocus range indicating a region of a defocus amount of each subject;
select at least one subject from among the plurality of detected subjects, based on a detection result of each subject and an estimation result of the defocus range of each subject; and
output information regarding the focusing on the selected subject or subjects.

2. The imaging assistance device according to claim 1,

wherein the input of the imaging setting is an input of changing a focus position with a manual operation performed by a user, and
wherein at least one subject is selected based on a detection result of the subject, an estimation result of the defocus range, and the focus position.

3. The imaging assistance device according to claim 1 or 2,

wherein, based on a defocus amount of a plurality of parts included in one subject, the defocus range is estimated for each of the plurality of the parts,
wherein a part with the narrower estimated defocus range is selected from among the plurality of the parts, and
wherein the information regarding the focusing on the selected part is output.

4. The imaging assistance device according to any one of claims 1 to 3, wherein selection of at least one subject is performed based also on a position of the subject in the captured image in addition to a detection result of the subject and an estimation result of the defocus range.

5. The imaging assistance device according to any one of claims 1 to 4, wherein selection of at least one subject is performed based on a position of the subject with respect to a specific region in the captured image.

6. The imaging assistance device according to any one of claims 1 to 5, wherein, as an output of the information regarding the focusing, at least one selected subject is displayed in a highlighted manner.

7. The imaging assistance device according to claim 6, wherein the highlighted display of at least one subject is gradually changed based on a focus degree on the subject.

8. The imaging assistance device according to any one of claims 1 to 5, wherein, as an output of the information regarding the focusing, a first index indicating an in-focus position of at least one selected subject, and a second index indicating an estimation result of the defocus range are displayed near the selected subject.

9. The imaging assistance device according to claim 8, wherein an image is displayed in which the first index and the second index are arranged in accordance with an arc of a circle.

10. The imaging assistance device according to claim 9, wherein a position of the first index with respect to the arc of the circle is changed in accordance with a change in the in-focus position, and a length of the second index with respect to the arc of the circle is changed in accordance with a change in the defocus range.

11. The imaging assistance device according to claim 8, wherein the first index is displayed in a highlighted manner in accordance with a change in the in-focus position, and the second index is displayed in a highlighted manner in accordance with a change in the defocus range.

12. The imaging assistance device according to any one of claims 8 to 11, wherein one set of the first index and the second index is displayed for a plurality of parts included in one subject.

13. The imaging assistance device according to claim 1, wherein an autofocus function is set in which at least one selected subject is a focus tracking target.

14. An imaging assistance method comprising:

detecting a plurality of subjects from a captured image obtained by image capturing in accordance with an input of an imaging setting related at least to focusing;
estimating a defocus range indicating a region of a defocus amount of each subject;
selecting at least one subject from among the plurality of subjects detected by the detecting, based on a detection result of each subject and an estimation result of the defocus range of each subject; and

outputting information regarding the focusing on the selected subject or subjects.

15. A non-transitory computer-readable storage medium storing a computer program that, when read and executed by a computer, causes the computer to function as an imaging assistance device configured to:

detect a plurality of subjects from a captured image obtained by image capturing in accordance with an input of an imaging setting related at least to focusing;
estimate a defocus range indicating a region of a defocus amount of each subject;
select at least one subject from among the plurality of detected subjects, based on a detection result of each subject and an estimation result of the defocus range of each subject; and
output information regarding the focusing on the selected subject or subjects.

# FIG. 1

DETECTION UNIT ~102

101

SETTING UNIT

SELECTION UNIT ~104

RANGE ESTIMATION UNIT ~103

OUTPUT UNIT ~105

# FIG. 2

# FIG. 3

```
          ╭─────────────────╮
          │  START IMAGE    │
          │   CAPTURING     │
          ╰─────────────────╯
                   │
                   ▼
     ┌───────────────────────────┐
     │     EXECUTE IMAGE         │ ～S301
     │   CAPTURING SETTING       │
     └───────────────────────────┘
                   │
                   ▼
     ┌───────────────────────────┐
     │     DETECT SUBJECT        │ ～S302
     └───────────────────────────┘
                   │
                   ▼
     ┌───────────────────────────┐
     │  ESTIMATE DEFOCUS RANGE   │ ～S303
     └───────────────────────────┘
                   │
                   ▼
     ┌───────────────────────────┐
     │     SELECT SUBJECT        │ ～S304
     └───────────────────────────┘
                   │
                   ▼
     ┌───────────────────────────┐
     │    OUTPUT INFORMATION     │ ～S305
     └───────────────────────────┘
                   │
                   ▼          S306
              ◇─────────────◇
             ╱  CONTINUE IMAGE ╲  YES
            ◇   CAPTURING?      ◇──────
             ╲                 ╱
              ◇─────────────◇
                   │ NO
                   ▼
          ╭─────────────────╮
          │   END IMAGE     │
          │   CAPTURING     │
          ╰─────────────────╯
```

# FIG. 4

# FIG. 5A

# FIG. 5B

PERSON'S PUPIL

PERSON'S FACE

PERSON'S BODY

CLOSE ———————————————— FAR

IN-FOCUS POSITION

# FIG. 6

START IMAGE
CAPTURING

ADJUST FOCUS POSITION — S601

DETECT SUBJECT — S602

ESTIMATE DEFOCUS RANGE — S603

SELECT CANDIDATES OF
SUBJECT TO BE HIGHLIGHTED — S604

DETERMINE SUBJECT TO
BE HIGHLIGHTED — S605

DISPLAY SUBJECT FRAME IN
SUPERIMPOSED MANNER — S606

S607

CONTINUE IMAGE
CAPTURING?

YES

NO

END IMAGE
CAPTURING

# FIG. 7A

# FIG. 7B

| TYPE | PART | REGION UPPER LEFT | REGION LOWER RIGHT | RELIABILITY |
|---|---|---|---|---|
| PERSON | BODY | (Xb1, Yb1) | (Xb2, Yb2) | Sb |
| PERSON | FACE | (Xf1, Yf1) | (Xf2, Yf2) | Sf |
| PERSON | LEFT EYE | (Xl1, Yl1) | (Xl2, Yl2) | Sl |
| PERSON | RIGHT EYE | (Xr1, Yr1) | (Xr2, Yr2) | Sr |

# FIG. 8A

803 805 804 802 800

801

812

811

814 815 813

# FIG. 8B

| | | |
|---|---|---|
| DOG 811 | RIGHT EYE | 821 |
| DOG 811 | LEFT EYE | 822 |
| DOG 811 | FACE | 823 |
| DOG 811 | BODY | 824 |
| PERSON 801 | RIGHT EYE | 831 |
| PERSON 801 | LEFT EYE | 832 |
| PERSON 801 | FACE | 833 |
| PERSON 801 | BODY | 834 |

CLOSE                              0[Fδ]                        FAR
(LARGEST DEFOCUS)                                    (SMALLEST DEFOCUS)

IN-FOCUS POSITION

# FIG. 9

| 910 | | |
|---|---|---|
| DOG 811 | RIGHT EYE | 900 |
| DOG 811 | LEFT EYE | 901 |
| DOG 811 | FACE | 902 |
| DOG 811 | BODY | 903 |
| PERSON 801 | RIGHT EYE | 904 |
| PERSON 801 | LEFT EYE | 905 |
| PERSON 801 | FACE | 906 |
| PERSON 801 | BODY | 907 |

CLOSE
(LARGEST DEFOCUS)

FAR
(SMALLEST DEFOCUS)

$0[F\delta]$

$d[F\delta]$    $-d[F\delta]$

IN-FOCUS POSITION

# FIG. 10A

# FIG. 10B

# FIG. 11A

# FIG. 11B

# FIG. 12

START IMAGE
CAPTURING

ADJUST FOCUS POSITION — S601

DETECT SUBJECT — S602

ESTIMATE DEFOCUS RANGE — S603

SELECT CANDIDATES OF
SUBJECT TO BE HIGHLIGHTED — S604

DETERMINE SUBJECT TO
BE HIGHLIGHTED — S605

DISPLAY SUBJECT FRAME IN
SUPERIMPOSED MANNER — S1206

DISPLAY FOCUS DEGREE
INFORMATION IN
SUPERIMPOSED MANNER — S1207

SEND FEEDBACK BY
TACTUAL SENSE — S1208

CONTINUE IMAGE
CAPTURING? — S607   YES

NO

END IMAGE
CAPTURING

# FIG. 13A

# FIG. 13B

FIG. 14A

FIG. 14B

FIG. 14C

FIG. 14D

FIG. 14E

# FIG. 15

# FIG. 16

DETECTION UNIT ~ 102

101

SETTING UNIT

104

SELECTION UNIT

1606

AF SETTING UNIT

RANGE ESTIMATION UNIT ~ 103

OUTPUT UNIT ~ 105

# FIG. 17

START IMAGE CAPTURING

ADJUST FOCUS POSITION — S601

DETECT SUBJECT — S602

ESTIMATE DEFOCUS RANGE — S603

SELECT CANDIDATES OF SUBJECT TO BE HIGHLIGHTED — S604

DETERMINE SUBJECT TO BE HIGHLIGHTED — S605

DISPLAY SUBJECT FRAME IN SUPERIMPOSED MANNER — S606

S1707
CHANGED TO AUTOFOCUS MODE BY PHOTOGRAPHER?

NO

YES

START AUTOFOCUSING — S1708

S607
CONTINUE IMAGE CAPTURING?

YES

NO

END IMAGE CAPTURING

# EUROPEAN SEARCH REPORT

**Application Number**

EP 25 20 1725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 722 769 B2 (CANON KK [JP]) 8 August 2023 (2023-08-08) | 1,2,4,6, 7,14,15 | INV. H04N23/60 |
| Y | * claim 1 * * figures 1, 8, 12, 16 * * column 4, line 36 - line 45 * * column 10, line 16 - line 35 * ----- | 3,5,8-13 | H04N23/67 |
| Y | US 2014/267869 A1 (SAWA YASUTAKA [JP]) 18 September 2014 (2014-09-18) | 3,5,8-12 | |
| A | * figures 9-14, 17, 18, 20(b) * * paragraph [0099] * * paragraph [0115] * * paragraph [0138] * * paragraph [0143] * ----- | 1,14,15 | |
| Y | US 2024/098366 A1 (MATSUI YOHEI [JP] ET AL) 21 March 2024 (2024-03-21) * claim 1 * ----- | 13 | |

**TECHNICAL FIELDS SEARCHED (IPC)**

H04N

The present search report has been drawn up for all claims

| Place of search | Date of completion of the search | Examiner |
|---|---|---|
| The Hague | 23 January 2026 | Benzeroual, Karim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

           

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 1725

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document cited in search report | | Publication date | Patent family member(s) | | Publication date |
|---|---|---|---|---|---|
| US 11722769 | B2 | 08-08-2023 | NONE | | |
| US 2014267869 | A1 | 18-09-2014 | CN | 104052925 A | 17-09-2014 |
| | | | JP | 6112925 B2 | 12-04-2017 |
| | | | JP | 2014178643 A | 25-09-2014 |
| | | | US | 2014267869 A1 | 18-09-2014 |
| US 2024098366 | A1 | 21-03-2024 | JP | 2024042614 A | 28-03-2024 |
| | | | US | 2024098366 A1 | 21-03-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007279334 A